# FASCICULE DE BREVET EUROPEEN

(11) **EP 0 933 289 B1**
(45) Date de publication et mention de la délivrance du brevet: **19.05.2004**
(21) Numéro de dépôt: 99490002.5
(22) Date de dépôt: 26.01.1999
(51) Int. Cl.: B62H 5/00, E05B 67/38, E05B 67/06

(54) **Cadenas**
Vorhängeschloss
Padlock

(30) Priorité: 03.02.1998 FR 9801565
(43) Date de publication de la demande: 04.08.1999
(73) Titulaire: Royal, Eddy, 59840 Premesques (FR)
(72) Inventeur: Royal, Eddy, 59840 Premesques (FR)
(74) Mandataire: Ecrepont, Robert

(56) Documents cités:
- WO-A-93/05258
- DE-A- 3 224 846
- GB-A- 617 978
- US-A- 2 831 335
- US-A- 3 924 426
- US-A- 5 505 064
- US-A- 5 622 066

## Description

L'invention se rapporte à un cadenas.

Par cadenas, on désigne un dispositif comprenant une première pièce affectant sensiblement une forme en U et un moyen verrouillable de fermeture de cette pièce en U, pour constituer une boucle fermée avec ladite pièce.

Par pièce affectant sensiblement une forme en U, on désigne une pièce qui, au moins en situation d'utilisation, forme une boucle ouverte et présente deux extrémités indépendantes s'étendant approximativement dans une même direction.

Par l'expression "moyen verrouillable de fermeture de la pièce en U, pour constituer une boucle fermée avec cette pièce", on désigne un moyen qui, comprenant au moins un mécanisme manoeuvrable avec une clef ou un organe équivalent, permet, d'une part, de retenir de manière réversible les extrémités indépendantes des branches de la pièce en U et, d'autre part, de constituer, par au moins une face de butée, un obstacle entre ces deux extrémités des branches.

L'invention s'applique avantageusement, mais non exclusivement, à un cadenas pour l'immobilisation d'un véhicule à deux roues, tel une motocyclette.

Dans ce type d'application, cité à titre d'exemple, le cadenas a des dimensions telles qu'il peut être utilisé, notamment, pour constituer une boucle fermée autour des deux bras de la fourche avant du véhicule à deux roues, de manière à entraver la rotation de la roue avant.

L'état de la technique comprend des cadenas de ce type qui, constitués d'éléments métalliques de haute résistance mécaniques, sont particulièrement résistants à l'effraction par sciage, cisaillage ou torsion.

De préférence, mais non limitativement, par soucis d'encombrement, en vue d'en faciliter le transport, sur ce type de cadenas, les dimensions de la pièce en U sont toutefois limitées à celles suffisantes pour enserrer, par exemple, les bras d'une fourche de véhicule deux roues.

Les utilisateurs qui, en plus de l'immobilisation d'une roue de leur véhicule, souhaitent pouvoir immobiliser ce véhicule par rapport à un organe scellé dans le sol, tel un poteau, doivent utiliser un cadenas supplémentaire ou un autre moyen, tel une chaîne, un câble.

L'achat d'un cadenas supplémentaire ou d'une chaîne est onéreux.

Une solution économique à ce problème consisterait à augmenter la longueur de la pièce en U du cadenas, jusqu'à la rendre suffisante pour lui permettre d'enserrer à la fois les bras d'une fourche de véhicule à deux roues et un poteau à proximité immédiate duquel le véhicule aura été placé, mais cela conduit à pratiquement doubler la longueur de la pièce en U, ce qui la rend intransportable dans des conditions de sécurité optimales.

En effet, la masse de ces cadenas conduit leurs utilisateurs notamment à les enfermer dans un coffre solidement relié au véhicule, tel un coffre de selle, afin qu'au cours des déplacements réalisés avec le véhicule, lesdits cadenas ne puissent pas se transformer en projectile et percuter leur propriétaire ou un tiers.

Les coffres prévus ou utilisés sur les véhicules à deux roues ont des dimensions implicitement limitées par la taille du véhicule.

L'augmentation de la longueur de la pièce en U du cadenas interdirait donc qu'on les place dans un coffre de véhicule à deux roues et conduirait donc les utilisateurs à se détourner de leur usage.

Il s'avère que l'utilisation d'un cadenas supplémentaire
ou d'une chaîne, pose également le problème du transport d'un tel accessoire.

Le document US-A-5.505.064 décrit un cadenas pour vélos.

Ce cadenas comprend trois pièces : un corps tubulaire et deux pièces en U.

Le corps tubulaire loge un mécanisme de serrure.

Le corps tubulaire est pourvu, à l'une de ses extrémités, d'une surépaisseur transversale portant un ergot de positionnement référencé 43.

Une première pièce en U du cadenas comprend, sur chacune de ses deux branches longitudinales, une partie de maintien pour le corps tubulaire.

Les deux parties de maintien sont en forme de tube à ouverture transversale, par rapport aux branches longitudinales de la première pièce en U.

Le corps tubulaire est monté en coulissement et butée dans ces deux parties tubulaires de maintien.

La butée est assurée à la fois par une paroi de fond transversale référencée 321 sur une première partie tubulaire de maintien et par l'appui de la surépaisseur transversale contre une ouverture de la deuxième partie tubulaire de maintien.

L'ergot de positionnement 43 du corps tubulaire vient se loger dans une encoche référencée 614 de la deuxième partie tubulaire de maintien.

Des lumières oblongues sont ménagées dans les parois annulaires des parties tubulaires de maintien.

Ces lumières oblongues sont, en position montée du cadenas, placées en regard de trous radiaux disposés dans la paroi du corps tubulaire.

Cette mise en regard est assurée par le positionnement relatif prédéterminé du corps tubulaire et de la première pièce en U du cadenas, par la butée de l'ergot 43 dans l'encoche 614.

Les deux extrémités des branches longitudinales de la deuxième pièce en U du cadenas viennent se loger, dans le corps tubulaire, pour y être maintenues verrouillées par le mécanisme de serrure interne au corps tubulaire.

A cette fin, ces extrémités des branches de la deuxième pièce en U passent au travers des lumières oblongues des parties tubulaires de maintien et au travers des trous disposés dans la paroi du corps tubulaire.

Le montage décrit dans ce document antérieur US-A-5.505.064 présente de nombreux inconvénients.

En premier lieu, ce cadenas antérieur est de conception telle qu'il n'est pas possible de rapprocher les parties coudées des deux pièces en U, lorsque le cadenas est utilisé pour attacher une roue de vélo à un poteau.

Une personne malveillante voit donc facilement le passage possible d'un outil de découpe des branches des pièces en U.

En deuxième lieu, il existe un risque élevé d'ouverture frauduleuse par découpe d'une des branches de la deuxième pièce en U et rotation de celle-ci autour de l'axe de la branche non découpée : rien dans la conception décrite pour ce cadenas antérieur n'interdit une telle manoeuvre malveillante.

En troisième lieu, par sa conception même, ce cadenas antérieur est tel que les branches des deux pièces en U ne peuvent présenter le même écartement : il existe nécessairement une petite pièce en U et une grande pièce en U.

Cette limitation peut être préjudiciable : lorsque l'on souhaite attacher plusieurs vélos sur un poteau, si la grande pièce en U est employée pour le poteau, la petite pièce en U risque d'être de taille insuffisante pour enserrer plusieurs roues.

Inversement, si l'on essaie d'utiliser la petite pièce en U pour le poteau, il existe un risque que l'ouverture de cette pièce soit insuffisante, compte tenu de la section du poteau.

En quatrième lieu, le cadenas décrit dans ce document antérieur comporte un corps tubulaire incorporant un mécanisme de serrure, cette pièce étant de structure complexe et onéreuse.

La réalisation de trous de passage des branches de la deuxième pièce en U, dans le corps tubulaire, entraîne des risques de passage d'eau, au voisinage du mécanisme de serrure interne au corps tubulaire, d'où des risques de corrosion et de très mauvais fonctionnement.

Un résultat que l'invention vise à obtenir est un cadenas qui, tout en étant économique, fiable et en présentant des qualités de compacité accrues par rapport aux cadenas de l'état de la technique, permet, plus particulièrement, mais non exclusivement d'enserrer un plus grand nombre d'éléments qu'un cadenas de l'état de la technique de compacité équivalente.

A cet effet, l'invention a pour objet un cadenas comprenant au moins une première pièce affectant sensiblement une forme en U et un moyen verrouillable de fermeture de cette pièce en U, pour constituer une boucle fermée avec ladite pièce, ce cadenas étant remarquable en ce que :
- chacune des deux branches de la première pièce en U porte localement, à son extrémité indépendante, un élément qui présente au moins deux faces sensiblement opposées entres lesquelles s'étend un alésage débouchant d'axe approximativement parallèle à l'axe longitudinal de la partie de ladite branche qui porte ledit élément et situé à une distance déterminée de cet axe, et
- le moyen de fermeture est, quant à lui formé, d'une part, d'une deuxième pièce constituée d'une pièce conformée en U et dont les branches traversent chacune un alésage d'un élément alésé porté par la première pièce en U et, d'autre part, d'un ensemble verrouillable de fermeture de la deuxième pièce en U, cet ensemble étant disposé sur la deuxième pièce en U de manière à entraver le dégagement de la première pièce en U par opposition à au moins l'une des faces présentées par les éléments alésés d'au moins l'une des butées dudit ensemble.

L'invention a également pour objet un cadenas comprenant au moins une première pièce affectant sensiblement une forme en U et un moyen verrouillable de fermeture de cette pièce en U, pour constituer une boucle fermée avec ladite pièce, ce cadenas étant remarquable en ce que :
- chacune des deux branches de la première pièce en U porte localement, à son extrémité indépendante, un élément qui présente au moins deux faces sensiblement opposées entres lesquelles s'étend un alésage débouchant d'axe approximativement parallèle à l'axe longitudinal de la partie de ladite branche qui porte ledit élément et situé à une distance déterminée de cet axe, et
- le moyen de fermeture est formé, d'une part, de deux tiges qui ont chacune une section transverale définie et présentent chacune deux extrémités opposées dont une extrémité pourvue d'une excroissance latérale et une extrémité dépourvue d'une telle excroissance et, d'autre part, d'un ensemble de verrouillage pour le maintien démontable de ces tiges par leur extrémité dépourvue d'excroissance, avec leurs axes longitudinaux espacés d'une distance, et
- les alésages réservés dans chaque élément alésé de la première pièce en U, d'une part, sont de section au moins suffisante pour autoriser, selon sa section transversale, le passage d'une des tiges depuis son extrémité dépourvue d'excroissance et sur au moins une fraction de la longueur de cette tige, d'autre part, l'entraxe de ces alésages est sensiblement égal à l'entraxe des tiges maintenues par l'ensemble de verrouillage, de manière telle que lesdites tiges et les alésages puissent coopérer.

L'invention sera bien comprise à la lecture de la description ci-après faite en regard du dessin à titre d'exemple non limitatif, en regard du dessin ci-annexé qui représente :
- figure 1 : une vue de face et en coupe partielle d'un cadenas selon l'invention,
- figure 2 : une vue latérale du cadenas de la figure 1,
- figure 3 : une vue latérale du cadenas de la figure 1 en position repliée,
- figure 4 : une vue de face d'un cadenas et en coupe partielle selon une variante de réalisation de l'invention,
- figure 5 : une vue latérale du cadenas de la figure 4,
- figure 6 : une vue latérale du cadenas de la figure 4 en position repliée,

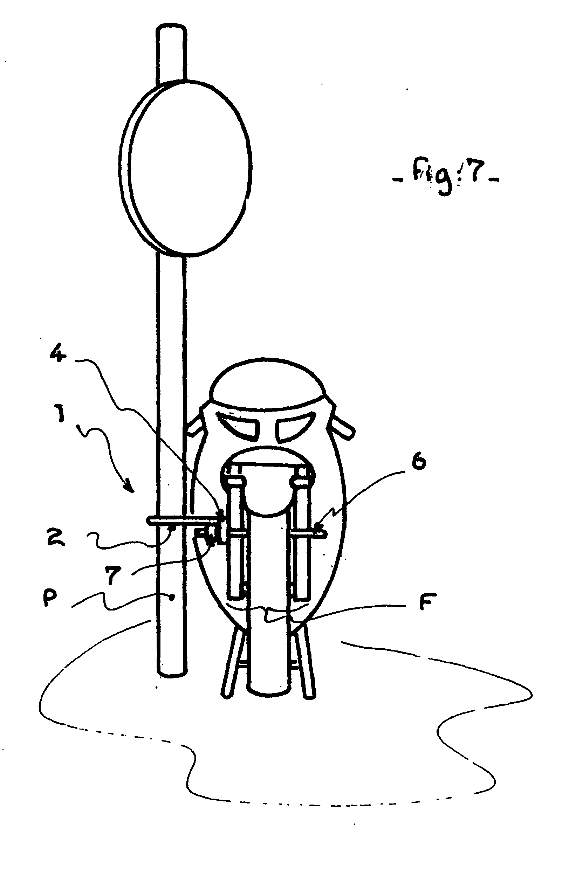

- figure 7 : une vue frontale d'un dispositif verrouillé au moyen d'un cadenas selon l'invention.

En se reportant au dessin, on voit un cadenas 1 comprenant au moins une première pièce 2 affectant sensiblement une forme en U et un moyen 3 verrouillable de fermeture de cette pièce 2 en U, pour constituer une boucle fermée avec ladite pièce 2.

Par pièce affectant sensiblement une forme en U, on désigne une pièce qui, au moins en situation d'utilisation, forme une boucle ouverte et présente deux extrémités indépendantes 2I s'étendant approximativement dans une même direction.

La première pièce en U a des dimensions transversales réduites par rapport à sa longueur développée.

La section transversale de cette première pièce peut avoir différentes formes.

Elle peut être classiquement circulaire, mais toute autre forme peut convenir.

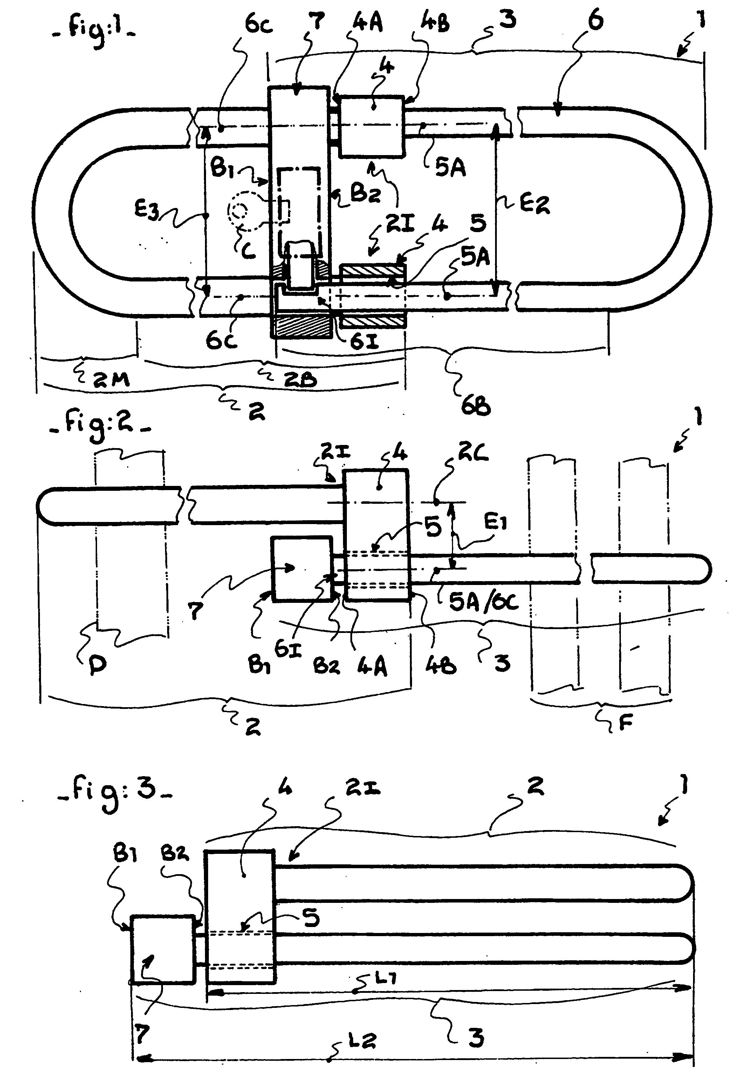

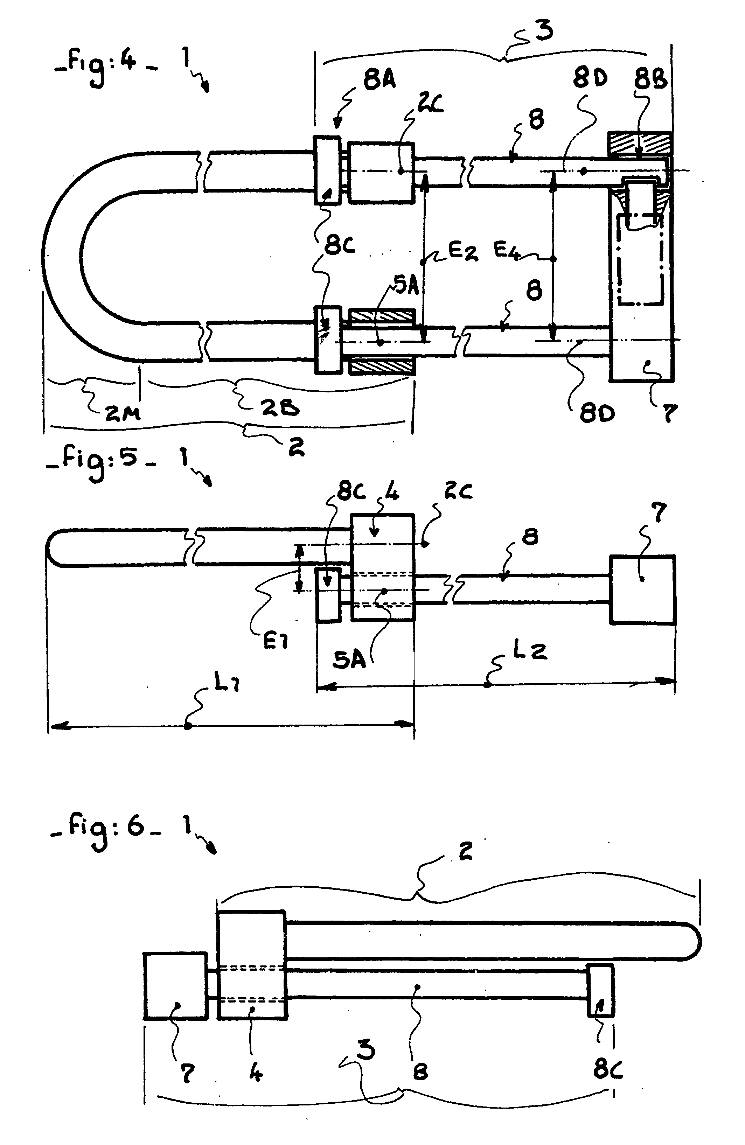

Tel que cela apparait aux figures 1 et 4, la première pièce en U comporte deux branches 2B notamment sensiblement parallèles qui, reliées par une partie médiane 2M, représentée courbe sur le dessin, présentent des extrémités indépendantes 2I.

Tel que cela a déjà été précisé, par l'expression "moyen 3 verrouillable de fermeture la pièce en U, pour constituer une boucle fermée avec cette pièce 2", on désigne un moyen qui, comprenant au moins un mécanisme manoeuvrable avec une clef C ou un organe équivalent, permet, d'une part, de retenir de manière réversible les extrémités indépendantes 2I des branches 2B de la pièce en U et, d'autre part, de constituer, par au moins une face de butée B1, B2, un obstacle s'étendant entre ces deux extrémités indépendantes 2I des branches.

De manière notable, chacune des deux branches 2B de la première pièce 2 en U porte, localement, à son extrémité indépendante 21, un élément 4 qui présente au moins deux faces sensiblement opposées 4A, 4B entres lesquelles s'étend un alésage débouchant 5 d'axe 5A approximativement parallèle à l'axe longitudinal 2C de la partie de la dite branche 2B qui porte ledit élément et situé à une distance déterminée E1 de cet axe 2C.

De manière également notable, 1 moyen 3 de fermeture est quant à lui formé, d'une part, d'une deuxième pièce 6 constituée d'une pièce conformée en U et dont les branches 6B traversent chacune un alésage 5 d'un élément alésé 4 porté par la première pièce 2 en U et, d'autre part, d'un ensemble 7 verrouillable de fermeture de la deuxième pièce en U, cet ensemble 7 étant disposé sur la deuxième pièce 6 en U de manière à entraver le dégagement de la première pièce 2 en U par opposition à au moins l'une des faces 4A, 4B présentées par les éléments alésés 4 d'au moins l'une des butées B1, B2 dudit ensemble 7.

De manière remarquable, d'une part, l'orientation de chaque pièce 4 alésée autour de l'axe longitudinal de l'extrémité indépendante 2I de la première pièce en U et, d'autre part, la distance E1 qui s'étend entre chaque axe longitudinal 5A d'un alésage d'un élément alésé 5 et l'axe 2C de l'extrémité indépendante 2I de la branche 2B de la première pièce 2 en U qui porte cet élément 5 alésé sont choisies de manière telle que, lorsque cette première pièce 2 est assemblée avec la deuxième pièce 6 en U, un ensemble 7 de verrouillage peut être monté sur ladite deuxième pièce 6 sans que la première pièce en U constitue un obstacle à ce montage.

L'homme du métier est à même de déterminer l'orientation des pièces alésées 4 et la distance E1 précitée.

Dans une forme de réalisation, d'une part, la première pièce en U est constituée par au moins une tige rigide 2A conformée en U et, d'autre part, les éléments 4 alésés sont disposés de manière telle que leurs alésages 5 sont sensiblement parallèles et séparés d'un entraxe E2.

Dans une autre forme de réalisation, d'une part, la première pièce en U est constituée par au moins un élément souple 2A et, d'autre part, la souplesse de cet élément souple est telle qu'il peut être courbé de manière au moins suffisante pour que les alésages 5 des éléments 4 alésés puissent être disposées avec leur axes longitudinaux 5A sensiblement parallèles et séparés d'un entraxe E2.

De manière notable :
- le moyen 3 de fermeture est lui même formé, d'une part, d'une deuxième pièce 6 constituée au moyen d'une tige rigide, affectant sensiblement la forme d'un U avec, des branches 6B qui ont chacune une section transversale définie et dont les axes longitudinaux 6C des extrémités indépendantes 6I sont espacés d'une distance E3 et, d'autre part, d'un ensemble 7 verrouillable de fermeture de cette pièce en U, de manière à constituer une boucle fermée ;
- les alésages 5 réservés dans chaque élément 4 alésé de la première pièce 2 en U, d'une part, sont de section au moins suffisante pour autoriser, selon sa section transversale, l'engagement de l'extrémité indépendante 61 d'une branche 6B de la deuxième pièce 6 en U sur au moins une fraction de sa longueur et, d'autre part, sont disposés selon un entraxe E2 qui est sensiblement égal à l'entraxe E3 des branches 6B de ladite deuxième pièce 6 en U.

D'une autre manière remarquable :
- le moyen 3 de fermeture est lui même formé, d'une part, d'une deuxième pièce 6 constituée au moyen d'une tige souple qui peut être courbée, sensiblement en forme de U, de manière au moins suffisante pour que les extrémités indépendantes de ses branches 6B, chacune de section transversale définie, puissent être disposées avec leurs axes longitudinaux 6I sensiblement parallèles et selon un entraxe E3 et, d'autre part, d'un ensemble 7 verrouillable de fermeture de cette pièce en U, de manière à constituer une boucle fermée ;
- les alésages 5 réservés dans chaque élément 4 alésé de la première pièce 2 en U, d'une part, sont de section au moins suffisante pour autoriser, selon sa section transversale, l'engagement de l'extrémité indépendante 6I d'une branche 6B de la deuxième pièce 6 en U sur au moins une fraction de sa longueur et, d'autre part, sont disposés selon un entraxe E2 qui est sensiblement égal à l'entraxe E3 selon lequel les branches 6B de ladite deuxième pièce 6 en U peuvent être disposées avec leur axes longitudinaux sensiblement parallèles.

Par l'expression "ensemble 7 verrouillable de fermeture de cette pièce en U, pour constituer une boucle fermée", on désigne un organe 7 qui, comprenant au moins un mécanisme manoeuvrable avec une clef C ou un organe équivalent, permet, d'une part, de retenir de manière réversible les extrémités indépendantes 6I des branches 6B de la deuxième pièce 6 en U et, d'autre part, de constituer, par au moins une face de butée B1, B2 un obstacle s'étendant entre ces deux extrémités des branches 6B.

Dans ce cas d'espèce, le moyen 3 est avantageusement constitué avec un cadenas de l'état de la technique.

Bien que cela ne soit que partiellement représenté, l'ensemble 7 de verrouillage comprend, de préférence, deux pênes qui permettent chacun le verrouillage d'une extrémité indépendante 6I d'une branche 6B de la deuxième pièce en U.

Pour coopérer avec l'un de ces pênes, chaque extrémité indépendante 6I d'une branche 6B de la deuxième pièce 6 est à cet effet équipée d'une dépression, telle une rainure.

De manière notable, d'une part, chacun des alésage 5 des éléments alésés 4 et, d'autre part, chacune des parties des branches de la deuxième pièce en U qui sont destinées à être engagées dans ces alésages 5, sont équipés d'éléments destinés à entraver la libre rotation autour de leur axe longitudinal.

Par exemple, les alésages et parties coopérantes des branches comportent des butées d'arrêt en rotation.

Ces particularités techniques visent à renforcer l'inviolabilité du cadenas.

En effet, dans la mesure où la deuxième pièce est constituée avec un corps rigide, en cas de sciage d'une des branches de cette deuxième pièce en U, il est impossible d'en obtenir, par rotation autour de l'axe de l'alésage retenant la branche non sectionnée, l'ouverture de la boucle constituée avec ladite deuxième pièce.

Les pièces 3,6 en U peuvent être assemblées de manière à constituer deux boucles situées de part et d'autre de l'ensemble 7 de verrouillage (figures 1 et 2).

Le cadenas de l'invention permet donc, lorsqu'il est ainsi constitué d'enserrer d'une part, par exemple, les bras de la fourche F avant d'un véhicule à deux roues (non représenté) et, d'autre part, un organe tel un poteau P auprès duquel le véhicule (non représenté) a été placé.

Les pièces 3,6 en U peuvent également être assemblées de manière à constituer deux boucles situées du même coté de l'ensemble 7 de verrouillage (figure 3).

Par cela, le cadenas de l'invention peut être transporté sous un volume réduit.

De manière remarquable, les dimensions longitudinales L1, L2 des pièces en U, dite première et deuxième, sont ajustées l'une en fonction de l'autre, de manière telle que lorsque ces pièces 3,6 en U sont assemblées pour constituer deux boucles situées du même coté de l'ensemble 7 de verrouillage, elles s'inscrivent sensiblement dans un même volume (figure 3).

Par cela le cadenas de l'invention acquiert une compacité certaine.

Dans une autre forme remarquable de l'invention :
- le cadenas comprend au moins une première pièce 2 affectant sensiblement une forme en U et un moyen 3 verrouillable de fermeture de cette pièce 2 en U, pour constituer une boucle fermée avec ladite pièce 2 ;
- chacune des deux branches 2B de la première pièce 2 en U porte localement, à son extrémité indépendante 21, un élément 4 qui présente au moins deux faces sensiblement opposées 4A, 4B entres lesquelles s'étend un alésage 5 débouchant d'axe 5A approximativement parallèle à l'axe longitudinal 2C de la partie de la dite branche 2B qui porte ledit élément et situé à une distance déterminée E1 de cet axe 2C ;
- le moyen 3 de fermeture est formé, d'une part, de deux de tiges 8 qui ont chacune une section transversale définie et présentent chacune deux extrémités opposées 8A, 8B dont une extrémité 8A pourvue d'une excroissance latérale 8C et une extrémité 8B dépourvue d'une telle excroissance 8C et, d'autre part, d'un ensemble de verrouillage 7 pour le maintien démontable de ces tiges par leur extrémité 8B dépourvue d'excroissance, avec leurs axes longitudinaux 8D espacés d'une distance E4 ;
- les alésages 5 réservés dans chaque élément 4 alésé de la première pièce 2 en U, d'une part, sont de section au moins suffisante pour autoriser, selon sa section transversale, le passage d'une des tiges 8 depuis son extrémité 8B dépourvue d'excroissance et sur au moins une fraction de la longueur de cette tige, d'autre part, l'entraxe E2 de ces alésages 5 est sensiblement égal à l'entraxe E4 des tiges 8 maintenues par l'ensemble de verrouillage 7, de manière telle que les dites tiges et les alésages puissent coopérer.

Dans cette version, de manière remarquable, d'une part, l'orientation de chaque pièce 4 alésée autour de l'axe longitudinal de l'extrémité indépendante 21 de la première pièce et, d'autre part, la distance E1 qui s'étend entre chaque axe longitudinal 5A d'un alésage d'un élément alésé 5 et l'axe 2C de l'extrémité 21 indépendante de la branche 2B de la première pièce 2 en U qui porte cet élément 5 alésé sont choisies de manière telle que, lorsque deux tiges 8 sont assemblées avec cette première pièce 2, un ensemble 7 de verrouillage peut être monté sur lesdites tiges 8.

De manière remarquable, les tiges 8 et la première pièce en U comprennent un moyen d'orientation des tiges 8 autour de leur axe longitudinal 81 de manière à assurer l'orientation de butées qui, portées à l'extrémité indépendants des tiges, reçoivent l'ensemble de verrouillage 7.

Pour constituer ce moyen d'orientation les tiges et les alésages ont par exemple des sections transversales polygonales.

L'homme du métier est à même de prévoir tout autre moyen d'orientation.

Lorsque les alésages 5 et parties coopérantes des tiges 8 comportent des butées d'arrêt en rotation, ces particularités techniques permettent également de renforcer l'inviolabilité du cadenas.

En effet, en cas de sciage d'une des tiges 8, il est impossible d'obtenir, par rotation de la première pièce en U autour de l'axe de l'alésage retenant la tige 8 non sectionnée, l'ouverture de la boucle constituée.

## Revendications

1. Cadenas (1) comprenant au moins une première pièce (2) affectant sensiblement une forme en U et un moyen (3) verrouillable de fermeture de cette pièce (2) en U, pour constituer une boucle fermée avec ladite pièce (2), dans lequel
- chacune des deux branches (2B) de la première pièce (2) en U porte localement, à son extrémité indépendante (2I), un élément (4) qui présente au moins deux faces sensiblement opposées (4A, 4B) entres lesquelles s'étend un alésage (5) débouchant d'axe (5A) approximativement parallèle à l'axe longitudinal (2C) de la partie de la dite branche (2B) qui porte ledit élément et situé à une distance déterminée E1 de cet axe (2C), et
- le moyen (3) de fermeture est, quant à lui, formé, d'une part, d'une deuxième pièce (6) constituée d'une pièce conformée en U et dont les branches (6B) traversent chacune un alésage (5) d'un élément alésé (4) porté par la première pièce (2) en U et, d'autre part, d'un ensemble (7) verrouillable de fermeture de la deuxième pièce en U, cet ensemble (7) étant disposé sur la deuxième pièce (6) en U de manière à entraver le dégagement de la première pièce (2) en U par opposition à au moins l'une des faces (4A, 4B) présentées par les éléments alésés (4) d'au moins l'une des butées (B1, B2) dudit ensemble (7),
ce cadenas étant **CARACTERISE en ce que** :
- les branches (6B) dépassant d'une fraction de leurs longueurs des éléments alésés (4), l'ensemble verrouillable étant disposé sur cette fraction de longueur desdites branches (6B) de la deuxième pièce.

2. Cadenas selon la revendication 1 **caractérisé en ce que**, d'une part, l'orientation de chaque pièce (4) alésée autour de l'axe longitudinal de l'extrémité indépendante (2I) de la première pièce en U et, d'autre part, la distance E1 qui s'étend entre chaque axe longitudinal (5A) d'un alésage d'un élément alésé (5) et l'axe (2C) de l'extrémité indépendante (21) de la branche (2B) de la première pièce (2) en U qui porte cet élément (5) alésé sont choisies de manière telle que, lorsque cette première pièce (2) est assemblée avec la deuxième pièce (6) en U, un ensemble (7) de verrouillage peut être monté sur ladite deuxième pièce (6) sans que la première pièce en U constitue un obstacle à ce montage.

3. Cadenas selon la revendication 1 ou 2 **caractérisé en ce que** :
- le moyen (3) de fermeture est lui même formé, d'une part, d'une deuxième pièce (6) constituée au moyen d'une tige rigide, affectant sensiblement la forme d'un U avec, des branches (6B) qui ont chacune une section transversale définie et dont les axes longitudinaux (6C) des extrémités indépendantes (6I) sont espacés d'une distance (E3) et, d'autre part, d'un ensemble (7) verrouillable de fermeture de cette pièce en U, de manière à constituer une boucle fermée,
- les alésages (5) réservés dans chaque élément (4) alésé de la première pièce (2) en U, d'une part, sont de section au moins suffisante pour autoriser, selon sa section transversale, le passage d'au moins une fraction de la longueur d'une branche (6B) de la deuxième pièce (6) en U et, d'autre part, sont disposés selon un entraxe (E2) qui est sensiblement égal à l'entraxe E3 des branches (6B) de ladite deuxième pièce (6) en U.

4. Cadenas selon l'une des revendications 1 à 3 **caractérisé en ce que** :
- le moyen (3) de fermeture est lui même formé, d'une part, d'une deuxième pièce (6) constituée au moyen d'une tige souple qui peut être courbée, sensiblement en forme de U, de manière au moins suffisante pour que les extrémités indépendantes de ses branches (6B), chacune de section transversale définie, puissent être disposées avec leur axes longitudinaux (61) sensiblement parallèles et selon un entraxe (E3) et, d'autre part, d'un ensemble (7) verrouillable de fermeture de cette pièce en U, de manière à constituer une boucle fermée,
- les alésages (5) réservés dans chaque élément (4) alésé de la première pièce (2) en U, d'une part, sont de section au moins suffisante pour autoriser, selon sa section transversale, l'engagement de l'extrémité indépendante (6I) d'une branche (6B) de la deuxième pièce (6) en U sur au moins une fraction de sa longueur et, d'autre part, sont disposés selon un entraxe (E2) qui est sensiblement égal à l'entraxe E3 selon lequel les branches (6B) de ladite deuxième pièce (6) en U peuvent être disposées avec leur axes longitudinaux sensiblement parallèles.

5. Cadenas selon l'une quelconque des revendications 1 à 4 **caractérisé en ce que**, d'une part, chacun des alésage (5) des éléments alésés (4) et, d'autre part, chacune des parties des branches de la deuxième pièce en U qui sont destinées à être engagées dans ces alésages (5), sont équipés d'éléments destinés à entraver la libre rotation autour de leur axe longitudinal.

6. Cadenas comprenant au moins une première pièce (2) affectant sensiblement une forme en U et un moyen (3) verrouillable de fermeture de cette pièce (2) en U, pour constituer une boucle fermée avec ladite pièce (2), dans lequel
- chacune des deux branches (2B) de la première pièce (2) en U porte localement, à son extrémité indépendante (21), un élément (4) qui présente au moins deux faces sensiblement opposées (4A, 4B) entres lesquelles s'étend un alésage (5) débouchant d'axe (5A) approximativement parallèle à l'axe longitudinal (2C) de la partie de la dite branche (2B) qui porte ledit élément et situé à une distance déterminée E1 de cet axe (2C),
ce cadenas étant charactérisé en ce que:
- le moyen (3) de fermeture est formé, d'une part, de deux de tiges (8) qui ont chacune une section transversale définie et présentent chacune deux extrémités opposées (8A, 8B) dont une extrémité (8A) pourvue d'une excroissance latérale (8C) et une extrémité (8B) dépourvue d'une telle excroissance (8C) et, d'autre part, d'un ensemble de verrouillage (7) pour le maintien démontable de ces tiges par leur extrémité (8B) dépourvue d'excroissance, avec leurs axes longitudinaux (8D) espacés d'une distance (E4), et
- les alésages (5) réservés dans chaque élément (4) alésé de la première pièce (2) en U, d'une part, sont de section au moins suffisante pour autoriser, selon sa section transversale, le passage d'une des tiges (8) depuis son extrémité (8B) dépourvue d'excroissance et sur au moins une fraction de la longueur de cette tige, d'autre part, l'entraxe (E2) de ces alésages (5) est sensiblement égal à l'entraxe (E4) des tiges (8) maintenues par l'ensemble de verrouillage (7), de manière telle que les dites tiges et les alésages puissent coopérer,
- les tiges (8) dépassant d'une fraction de leurs longueurs, des éléments alésés (4), l'ensemble de verrouillage (7) étant disposés sur cette fraction de longueur desdites tiges (8).

7. Cadenas selon la revendication 6 **caractérisé en ce que**, d'une part, l'orientation de chaque pièce (4) alésée autour de l'axe longitudinal de l'extrémité indépendante (21) de la première pièce et, d'autre part, la distance (E1) qui s'étend entre chaque axe longitudinal (5A) d'un alésage d'un élément alésé (5) et l'axe (2C) de l'extrémité (21) indépendante de la branche (2B) de la première pièce (2) en U qui porte cet élément (5) alésé sont choisies de manière telle que, lorsque deux tiges (8) sont assemblées avec cette première pièce (2), un ensemble (7) de verrouillage peut être monté sur lesdites tiges (8).

8. Cadenas selon la revendication 6 ou 7 **caractérisé en ce que** les tiges (8) et la première pièce en U comprenant un moyen d'orientation des tiges (8) autour de leur axe longitudinal (81) de manière à assurer l'orientation de butées qui, portées à l'extrémité indépendante des tiges, reçoivent l'ensemble de verrouillage (7).

9. Cadenas selon l'une quelconque des revendications 6 à 8 **caractérisé en ce que** :
- d'une part, la première pièce en U est constituée par au moins une tige rigide (2A) conformée en U et,
- d'autre part, les éléments (4) alésés sont disposés de manière telle que leurs alésages (5) sont sensiblement parallèles et séparés d'un entraxe (E2).

10. Cadenas selon l'une quelconque des revendications 6 à 8 **caractérisé en ce que** :
- d'une part, la première pièce en U est constituée par au moins un élément souple (2A) et,
- d'autre part, la souplesse de cet élément souple est telle qu'il peut être courbé de manière au moins suffisante pour que les alésages (5) des éléments (4) alésés puissent être disposées avec leur axes longitudinaux (5A) sensiblement parallèles et séparés d'un entraxe (E2).

## Patentansprüche

1. Vorhängeschloss bzw. Bügelschloss (1), das umfasst mindestens ein erstes Teil (2), das im Wesentlichen eine U-Form hat, und eine Verriegelungseinrichtung (3) zum Verschließen dieses U-förmigen Teils (2) zur Bildung eines geschlossenen Ringes mit dem genannten Teil (2), in dem
- jeder der beiden Schenkel (2B) des U-förmigen ersten Teils (2) lokal an seinem freien Ende (21) ein Element (4) trägt, das mindestens zwei im Wesentlichen einander gegenüberliegende Flächen (4A, 4B) aufweist, zwischen denen sich eine Bohrung (5) erstreckt, deren Achse (5A) etwa parallel zur Längsachse (2C) des Abschnitts des Schenkels (2B) verläuft, der das Element trägt, und die in einem vorgegebenen Abstand E1 von dieser Achse (2C) angeordnet ist, und
- die Schließeinrichtung (3) ihrerseits gebildet wird einerseits von einem zweiten Teil (6), das aus einem ebenfalls U-förmigen Teil besteht und dessen Schenkel (6B) jeweils eine Bohrung (5) eines durchbohrten Elements (4) durchqueren, das von dem ersten U-förmigen Teil (2) getragen wird, und andererseits von einer Verriegelungseinheit (7) zum Verschließen des U-förmigen zweiten Teils (6), wobei diese Einheit (7) auf dem U-förmigen zweiten Teil (6) so angeordnet ist, dass es die Freigabe des U-förmigen ersten Teils (2) verhindert mittels mindestens einem der Anschläge (B1, B2) der Einheit (7) an mindestens einer der Oberflächen (4A, 4B), welche die durchbohrten Elemente (4) aufweisen,
wobei das Vorhängeschloss bzw. Bügelschloss **dadurch gekennzeichnet ist, dass**
- die Schenkel (6B) um einen Bruchteil ihrer Längen die durchbohrten Elemente (4) überragen, wobei die Verriegelungseinheit auf diesem Bruchteil der Länge der Schenkel (6B) des zweiten Teils (6) angeordnet ist.

2. Vorhängeschloss nach Anspruch 1, **dadurch gekennzeichnet, dass** einerseits die Ausrichtung jedes durchbohrten Teils (4) um die Längsachse des freien Endes (21) des U-förmigen ersten Teils herum und andererseits der Abstand E1, der sich zwischen jeder Längsachse (5A) einer Bohrung eines durchbohrten Elements (5) und der Achse (2C) des freien Endes (21) des Schenkels (2B) des U-förmigen ersten Teils (2) erstreckt, das dieses durchbohrte Element (5) trägt, so gewählt sind, dass dann, wenn das erste Teil (2) mit dem U-förmigen zweiten Teil (6) zusammengefügt (verbunden) wird, eine Verriegelungseinheit (7) auf dem zweiten Teil (6) montiert werden kann, ohne dass das U-förmige erste Teil diese Montage behindert.

3. Vorhängeschloss nach Anspruch 1 oder 2, **dadurch gekennzeichnet, dass**
die Schließeinrichtung (3) selbst gebildet wird einerseits von einem zweiten Teil (6), das mindestens besteht aus einem starren Schaft, der im Wesentlichen die Form eines U hat, mit Schenkeln (6B), die jeweils einen definierten Querschnitt haben und bei denen die Längsachsen (6C) der freien Enden (6I) in einem Abstand (E3) voneinander angeordnet sind, und andererseits von einer Verriegelungseinheit (7) zum Verschließen dieses U-förmigen Teils unter Bildung eines geschlossenen Ringes, und
- die Bohrungen (5), die in jedem durchbohrten Element (4) des U-förmigen ersten Teils (2) vorgesehen sind, einerseits einen Querschnitt haben, der mindestens ausreicht, um den Durchgang mindestens eines Bruchteils der Länge eines Schenkels (6B) des U-förmigen zweiten Teils (6) durch seinen Querschnitt zu ermöglichen, und andererseits in einem Achsabstand (E2) voneinander angeordnet sind, der im Wesentlichen gleich dem Achsabstand (E3) der Schenkel (6B) des U-förmigen zweiten Teils (6) ist.

4. Vorhängeschloss nach einem der Ansprüche 1 bis 3, **dadurch gekennzeichnet, dass**:
- die Schließeinrichtung (3) ihrerseits gebildet wird einerseits von einem zweiten Element (6), das aus mindestens einem flexiblen Schaft besteht, der gekrümmt sein kann, der im Wesentlichen U-förmig ist, sodass er mindestens ausreicht, damit die freien Enden seiner Schenkel (6B), die jeweils einen definierten Querschnitt haben, mit ihren Längsachsen (61), die im Wesentlichen parallel zueinander in einem Achsabstand (E3) voneinander angeordnet sein können, und andererseits von einer Verriegelungseinheit (7) zum Verschließen dieses U-förmigen Teils, um einen geschlossenen Ring zu bilden, und
- die Bohrungen (5), die in jedem durchbohrten Element (4) des U-förmigen ersten Teils (2) vorgesehen sind, einerseits einen Querschnitt haben, der mindestens ausreicht, um das Festhalten des freien Endes (61) eines Schenkels (6B) des U-förmigen zweiten Elements (6) über mindestens einen Bruchteil seiner Länge zu ermöglichen,und andererseits in einem Achsabstand (E2) voneinander angeordnet sind, der im Wesentlichen gleich dem Achsabstand (E3) ist, in dem die Schenkel (6B) des U-förmigen zweiten Teils (6) mit ihren im Wesentlichen parallelen Längsachsen angeordnet sein können.

5. Vorhängeschloss nach einem der Ansprüche 1 bis 4, **dadurch gekennzeichnet, dass** einerseits jede der Bohrungen (5) der durchbohrten Elemente (4) und andererseits jeder der Abschnitte der Schenkel des U-förmigen zweiten Teils (2), die dazu bestimmt sind, in diesen Bohrungen (5) festgehalten zu werden, mit Elementen ausgestattet sind, die dazu bestimmt sind, die freie Drehung um ihre Längsachse zu verhindern.

6. Vorhängeschloss, das umfasst mindestens ein erstes Teil (2), das im Wesentlichen U-förmig ist, und eine Verriegelungseinrichtung (3) zum Verschließen dieses U-förmigen zweiten Teils (2), um mit dem zweiten Teil (2) einen geschlossenen Bügel zu bilden, bei dem
- jeder der beiden Schenkel (2B) des U-förmigen ersten Teils (2) lokal an seinem freien Ende (21) ein Element (4) trägt, das mindestens zwei im Wesentlichen einander gegenüberliegende Flächen (4A, 4B) aufweist, zwischen denen sich eine Bohrung (5) erstreckt, deren Achse (5A) etwa parallel zu der Längsachse (2C) des Abschnitts des Schenkels (2B) verläuft, der das Element trägt, und die in einem vorgegebenen Abstand (E1) von dieser Achse (2C) angeordnet ist,
wobei das Vorhängeschloss **dadurch gekennzeichnet ist, dass**
- die Schließeinrichtung (3) gebildet wird einerseits von zwei Schäften (8), die jeweils einen definierten Querschnitt haben und jeweils zwei einander gegenüberliegende Enden (8A, 8B) aufweisen, von denen ein Ende (8A) mit einer seitlichen Ausstülpung (8C) ausgestattet ist, und ein Ende (8B) frei von einer solchen Ausstülpung (8C) ist und andererseits von einer Verriegelungseinheit (7), für das demontierbare Festhalten dieser Schäfte durch ihr Ende (8B), das frei von einer Ausstülpung ist, wobei ihre Längsachsen (8D) in einem Abstand (E4) voneinander angeordnet sind, und
- die Bohrungen (5), die in jedem durchbohrten Element (4) des U-förmigen ersten Teils (2) vorgesehen sind, einerseits einen Querschnitt haben, der mindestens ausreicht, um den Durchgang eines der Schäfte (8) ab seinem Ende (8B), das frei von einer Ausstülpung ist, über mindestens einen Bruchteil der Länge dieses Schaftes durch seinen Querschnitt zu ermöglichen, und andererseits der Achsabstand (E2) dieser Bohrungen (5) im Wesentlichen gleich dem Achsabstand (E4) der Schäfte (8) ist, die durch die Verriegelungseinheit (7) so festgehalten werden, dass die Schäfte und die Bohrungen kooperieren können,
- wobei die Schäfte (8) um einen Bruchteil ihrer Länge die durchbohrten Elemente (4) überragen, wobei die Verriegelungseinheit (7) auf diesem Bruchteil der Länge der Schäfte (8) angeordnet ist.

7. Vorhängeschloss nach Anspruch 6, **dadurch gekennzeichnet, dass** einerseits die Ausrichtung jedes durchbohrten Elements (4) um die Längsachse des freien Endes (21) des ersten Teils (2) herum und andererseits der Abstand (E1), der sich zwischen jeder Längsachse (5A) einer Bohrung eines durchbohrten Elements (5) und der Achse (2C) des freien Endes (21) des Schenkels (2B) des U-förmigen ersten Teils (2), das dieses durchbohrte Element (5) trägt, erstreckt, so gewählt sind, dass dann, wenn zwei Schäfte (8) mit diesem ersten Teil (2) zusammengefügt (verbunden) werden, eine Verriegelungseinheit (7) auf den Schäften (8) montiert sein kann.

8. Vorhängeschloss nach Anspruch 6 oder 7, **dadurch gekennzeichnet, dass** die Schäfte (8) und das U-förmige erste Teil (2) eine Einrichtung zur Ausrichtung der Schäfte (8) um ihre Längsachse (81) herum aufweisen, um die Ausrichtung von Anschlägen zu gewährleisten, die, getragen von dem freien Ende der Schäfte, die Verriegelungseinheit (7) aufnehmen.

9. Vorhängeschloss nach einem der Ansprüche 6 bis 8, **dadurch gekennzeichnet, dass**
- einerseits das erste U-förmige Teil (2) besteht aus mindestens einem starren Schaft (2A), der ebenfalls U-förmig ist, und
- andererseits die durchbohrten Elemente (4) so angeordnet sind, dass ihre Bohrungen (5) im Wesentlichen parallel zueinander und in einem Achsabstand (E2) voneinander verlaufen.

10. Vorhängeschloss nach einem der Ansprüche 6 bis 8, **dadurch gekennzeichnet, dass**
- einerseits das erste U-förmige Teil (2) besteht aus mindestens einem flexiblen Element (2A) und
- andererseits die Flexibilität dieses flexiblen Elements so ist, dass es mindestens in ausreichendem Maße gekrümmt werden kann, sodass die Bohrungen (5) der durchbohrten Elemente (4) mit ihren Längsachsen (5A) im Wesentlichen parallel zueinander und in einem Achsabstand (E2) voneinander angeordnet sein können.

## Claims

1. Padlock (1) comprising at least a first part (2), which is substantially U-shaped, and a locking means (3) for closing this U-shaped part (2), to constitute a closed loop with said part (2), wherein
- each of the two branches (2B) of the first U-shaped part (2) bears locally, at its independent end (2I), an element (4) which has at least two substantially opposite faces (4A, 4B) between which extends an opening bore (5), the axis (5A) of which is approximately parallel to the longitudinal axis (2C) of the portion of said branch (2B) which bears said element, and is located at a specific distance E1 from this axis (2C), and
- the closing means (3), for its part, is formed, firstly, by a second part (6) constituted by a U-shaped part and the branches (6B) of which each pass through a bore (5) of a bored element (4) borne by the first U-shaped part (2), and, secondly, by a locking assembly (7) for closing the second U-shaped part, this assembly (7) being disposed on the second U-shaped part (6) so as to impede the disengagement of the first U-shaped part (2) by opposition of at least one of the stops (B1, B2) of said assembly to at least one of the faces (4A, 4B) presented by the bored elements (4),
this padlock being **characterised in that**,
- the branches (6B) protrude by a fraction of their lengths from the bored elements (4), the locking assembly being disposed on this fraction of the length of said branches (6B) of the second part.

2. Padlock according to claim 1, **characterised in that**, firstly, the orientation of each bored part (4) around the longitudinal axis of the independent end (2I) of the first U-shaped part and, secondly, the distance E1 which extends between each longitudinal axis (5A) of a bore of a bored element (5) and the axis (2C) of the independent end (21) of the branch (2B) of the first U-shaped part (2) which bears this bored element (5) are selected in such a way that, when this first part (2) is assembled with the second U-shaped part (6), a locking assembly (7) can be mounted on said second part (6) without the first U-shaped part constituting an obstacle to this mounting.

3. Padlock according to claim 1 or 2, **characterised in that:**
- the closing means (3) is itself formed, firstly, by a second part (6) constituted by means of a rigid rod, assuming substantially the shape of a U, with branches (6B) each of which has a defined cross section and the longitudinal axes (6C) of the independent ends (61) of which are spaced apart by a distance (E3) and, secondly, by a locking assembly (7) for closing this U-shaped part in such a way as to constitute a closed loop,
- the bores (5) reserved in each bored element (4) of the first U-shaped part (2), firstly, have a section which is at least sufficient to permit, according to its cross-section, the passage of at least a fraction of the length of a branch (6B) of the second U-shaped part (6), and, secondly, are disposed at a centre distance of axes (E2) which is substantially equally to the centre distance E3 between the branches (6B) of said second U-shaped part (6).

4. Padlock according to one of claims 1 to 3, **characterised in that**
- the closing means (3) is itself formed, firstly, by a second part (6) constituted by means of a flexible rod which can be curved, substantially in a U-shape, in a manner which is at least sufficient to permit the independent ends of its branches (6B), each having a defined cross-section, to be disposed with their longitudinal axes (6I) substantially parallel and at a centre distance (E3), and, secondly, by a locking assembly (7) for closing this U-shaped part, so as to constitute a closed loop,
- the bores (5) reserved in each bored element (4) of the first U-shaped part (2), firstly, have a section which is at least sufficient to permit, according to its cross-section, the engagement of the independent end (6I) of a branch (6B) of the second U-shaped part (6) over at least a fraction of its length, and, secondly, are disposed at a centre distance (E2) which is substantially equal to the centre distance E3 at which the branches (6B) of said second U-shaped part (6) can be disposed with their longitudinal axes substantially parallel.

5. Padlock according to any one of claims 1 to 4, **characterised in that**, firstly, each bore (5) of the bored elements (4) and, secondly, each portion of the branches of the second U-shaped part which are intended to be engaged in these bores (5), are fitted with elements intended to impede free rotation around their longitudinal axis.

6. Padlock comprising at least a first part (2), which is substantially U-shaped, and a locking means (3) for closing this U-shaped part (2), to constitute a closed loop with said part (2), wherein
- each of the two branches (2B) of the first U-shaped part (2) bears locally, at its independent end (21), an element (4) which has at least two substantially opposite faces (4A, 4B) between which extends an opening bore (5) having an axis (5A) which is approximately parallel to the longitudinal axis (2C) of the portion of said branch (2B) which bears said element, and is located at a specific distance E1 from this axis (2C),
this padlock being **characterised in that**:
- the closing means (3) is formed, firstly, by two rods (8), each having a defined cross-section and two opposite ends (8A, 8B), one end (8A) of which is provided with a lateral protuberance (8C) and one end (8B) has no such protuberance, and, secondly, by a locking assembly (7) to hold these rods in a detachable manner via their end (8B) having no protuberance, with their longitudinal axes (8D) spaced apart by a distance (E4), and
- the bores (5) reserved in each bored element (4) of the first U-shaped part (2), firstly, have a section which is at least sufficient to permit, according to its cross-section, the passage of one of the rods (8) from its end (8B) having no protuberance and over at least a fraction of the length of this rod; secondly, the centre distance (E2) between the axes of these bores (5) is substantially equal to the centre distance (E4) between the axes of the rods (8) held by the locking assembly (7), such that said rods and the bores can cooperate,
- the rods (8) projecting by a fraction of their lengths from the bored elements (4), the locking assembly (7) being disposed on this fraction of the length of said rods (8).

7. Padlock according to claim 6, **characterised in that**, firstly, the orientation of each bored part (4) around the longitudinal axis of the independent end (21) of the first part and, secondly, the distance (E1), which extends between each longitudinal axis (5A) of a bore of a bored element (5) and the axis (2C) of the independent end (2I) of the branch (2B) of the first U-shaped part (2) which bears this bored element (5) are selected such that, when two rods (8) are assembled with this first part (2), a locking assembly (7) can be mounted on said rods (8).

8. Padlock according to claim 6 or 7, **characterised in that** the rods (8) and the first U-shaped part comprise a means of orienting the rods (8) around their longitudinal axis (81) so as to ensure the orientation of stops which, borne at the independent ends of the rods, receive the locking assembly (7).

9. Padlock according to any one of claims 6 to 8, **characterised in that**:
- firstly, the first U-shaped part is constituted by at least one rigid, U-shaped rod (2A), and
- secondly, the bored elements (4) are disposed in such a way that their bores (5) are substantially parallel and separated by a centre distance (E2).

10. Padlock according to any one of claims 6 to 8, **characterised in that**:
- firstly, the first U-shaped part is constituted by at least one flexible element (2A), and
- secondly, the flexibility of this flexible element is such that it can be bent at least in a manner sufficient to permit the bores (5) of the bored elements (4) to be disposed with their longitudinal axes (5A) substantially parallel and separated by a centre distance (E2).
